Europäisches Patentamt

European Patent Office

Office européen des brevets

(19)

(11) Publication number: **0 120 561**
**B1**

(12) **EUROPEAN PATENT SPECIFICATION**

(45) Date of publication of patent specification: 22.07.87

(51) Int. Cl.⁴: **A 23 L 2/38,** A 23 L 1/236

(21) Application number: 84300484.7

(22) Date of filing: 26.01.84

(54) **Water-agglomeration method for depeptide sweetened products.**

(30) Priority: 27.01.83 US 461336

(43) Date of publication of application:
03.10.84 Bulletin 84/40

(45) Publication of the grant of the patent:
22.07.87 Bulletin 87/30

(84) Designated Contracting States:
DE FR GB IT SE

(56) References cited:
DE-A-2 646 224
US-A-4 007 288

(73) Proprietor: GENERAL FOODS CORPORATION
250 North Street
White Plains, N.Y. 10625 (US)

(72) Inventor: Brandt, Michael John
140, North Broadway Apt. S2
Irvington New York 10533 (US)
Inventor: Randall, John Ralph
25, Musket Ridge Road
New Fairfield Connecticut 06810 (US)
Inventor: Schlegel, Jonathan Paul
17, Haven Court
Nyack New York 10960 (US)

(74) Representative: Baillie, Iain Cameron et al
c/o Ladas & Parry Isartorplatz 5
D-8000 München 2 (DE)

Courier Press, Leamington Spa, England.

EP 0 120 561 B1

# 0 120 561

**Description**

The present invention relates generally to modes of producing agglomerated products, and more specifically to an improved method for agglomerating dipeptide-sweetened food products via agglomeration.

With the introduction of such novel sweetening agents as aspartyl-phenylalanine methylester (APM) glycyrrhizin, neo-hesperdine or many of the compounds now under investigation, novel methods for incorporating said ingredients are needed so that said ingredients may be included in various comestible product formulations. Being of novel structure and of a idiosyncratic nature, the above mentioned sweeteners present a multiplicity of processing problems. For example, APM resists homogenous placement. When added to a comestible dry mix, APM tends to coalesce as the individual crystals are, due to attractive forces, induced to stick to one another. This phenomenon is so great that individual APM crystals will transmigrate through the mix and form ball-like clumps of said sweetening agent. Compounding the above stated problem, APM crystals imbued with said attractive forces will actually adhere to the processing machinery itself, said adhesion preventing the introduction of all of the APM into the mix.

There are many techniques for placing APM crystals or other sweeteners within a comestible dry mix. For example, one may dissolve the total mix product including the sweetener and, via a spray drying unit, produce regularized particles of said finished mix product. Spray drying, wherein the total mix is dissolved, requires a great deal of energy to dry the comestible mix as well as endangering the APM by introducing said APM to what is usually an aqueous acid or other degrative liquid environment. On the other hand, dry mixing of a comestible mix with the inclusion of APM or other dipeptide sweeteners, while of an economical nature, is precluded by the fact that APM will clump and coaelesce and thereby greatly reduce the rate of solubility of the mix.

The method is known as fluidized bed agglomeration, wherein a series of disparate ingredients is suspended by a stream of air above the bed of the agglomerating unit, so that an agglomerating vehicle may be used to induce the formation of regularly sized particles.

The prior art is aware of examples of various and sundry agglomeration procedures where sugar, saccharine and cyclamates are the major sweetening agents. The previously published prior art, however, has not dealt with the agglomeration of such idiosyncratic and disruptive agents as APM.

Disclosure of the Invention

Accordingly, the present invention provides a process for effecting an APM-sweetened, comestible product via an improved water-agglomeration procedure. First, a series of dry particulate ingredients such as flavorings, fillers, and acids, together with APM is blended so that a homogeneous dry mix is achieved. This homogenous mixture which will continue to stay homogenous for only a very short period of time is introduced directly into a suitable fluidized agglomerating apparatus. The agglomeration apparatus fluidizes the mix and induces the suspension of said mixed particles within the unit. An aqueous fluid consisting essentially of water and a colorant, such as a solubilized Food, Drugs and Cosmetics dye, is then sprayed into the agglomeration unit, said unit being maintained within a critical temperature range, so that the disparate particles are made to coalesce into larger regularized particles thereby causing the adhesion of said APM sweetener into the edible comestible product. The newly formed agglomerated product or agglomerate is then dried and inspected. If resultant agglomerated particles are of a size which is smaller than optimally desired, said particles may be made to increase in size merely by contacting said particles with the aqueous fluid vehicle. These finished particles may then be directly assimilated into containers and sold, for each particle represents approximately the total reconstituted comestible product. The above outlined procedure, permits relatively small amounts of energy to be used, for the fluidized mix is exposed to water in only the agglomeration step thereby reducing the energy costs necessary to dry a disolved or essentially dissolved solution-suspension. Moreover, this instant aqueous procedure protects the dipeptide sweetener from degradation due to prolonged chemical reaction. Moreover, it has been found that the aqueously constructed agglomerates provide enhanced solubility characteristics, said characteristics being comparable to an agglomerated product wherein the agglomeration vehicle was an aqueous dextrin solution said mixture being noted as a solubility enhancer. Other advantages are decreased dustiness, enhanced flow characteristics, improved process flexibility, lower costs and fewer calories.

The improved method for agglomerating aspartame sweetened beverage mixes is outlined in a stepwise fashion hereinbelow. First, aspartame (APM) of a suitable particle size, said size being between $5 \times 10^5$ to $30 \times 10^7 \mu m$ is obtained and is to be blended by weight percent is within a preferred particle size range of from $5 \times 10^6$ to $12.5 \times 10^7 \mu m$. The ingredients including an acidulant, and one or more of a plurality of flavorings are combined for blending.

The blending operation, which may be effected via a ribbon-type blender, a V-blender or other suitable device, involves the addition of the total contents, that is all components with partial or complete exclusion of colorings, to be added to a holding container. Activation of the blender for a blendidng period which is proportional to the amount of "mix" results in a homogenous comestible mixture. The mixture is then ready to undergo further processing.

2

The thoroughly admixed components are then transferred to a fluidized bed agglomerating unit, said unit may be either a "batch"-type or a kind that employs an endless foraminous belt and is continuous in nature. The agglomeration procedure is initiated with the addition of the admixture to the agglomerator, wherein the particles are induced to rise above the base portion and are kept suspended therein. The inlet air temperature must be kept below a maximum of 204.4°C with a preferred inlet temperature range of ambient to 100°C. Within the agglomerator environment, the finely divided particles of the mix are fluidizedly suspended within the machine, the APM component being dispersed evenly throughout.

As a preferred embodiment, an aqueous solution consisting of water and colorants is used as the agglomerating vehicle to bind the fluidized and finely dispersed particles. The particles which comprise the comestible mix are in essence momentarily cemented to the various components of the mix to form regular-sized particles thereby. Unlike using citric acid or other organic acids, as agglomerating vehicles, that water-agglomerates will not form a hard crystalline-shelled agglomerate particle. Moreover, the agglomerate is essentially non-hygroscopic, so that it will not attract water as an acid-shelled agglomerate would.

According to this invention the agglomerating vehicle is a water solution containing only a colorant. The agglomerating vehicle is maintained at a temperature of up to but not exceeding 100°C and is sprayed onto the fluidized bed. Spraying may be accomplished by one or more nozzles or similar spray assemblies, which spray the solution into the fluidized mix. The agglomerating vehicle is sprayed in at a rate so that it is dispensed within about one hour. Atomization of the fluid is effected by introducing compressed air at between $5 \times 10^4$ and $5 \times 10^5$ Pa with a preferred range of operating pressures between $2 \times 10^5$ to $4 \times 10^5$ Pa. The fluid is sprayed into the mix at a weight ratio of from 1:5 to 1:20, and typically from 1:12 to 1:17.

The newly formed agglomerates display a vivid color and a uniform size. By including the coloring as a component of the agglomerating vehicle, the intense color may directly color the agglomerate. The moisture content is between .6% and 4% after drying of the agglomerate has been effected with a preferred moisture content of less than 1%.

In this fixed state, the sweetener, for example APM, will stay bound within the regularized particles of the comestible mix. At this point the agglomerated mix is ready to be packaged within appropriate containers and commercially marketed. The APM remains in a fixed and stable condition for prolonged periods of time and the agglomerated mix retains its ability to quickly dissolve when introduced into cold water.

Best Mode for Carrying Out the Invention

## Example 1

The appropriately sized APM is added to a blending apparatus, for example, a Day Ribbon Blender with such components as citric acid, potassium citrate and flavor. In a lemon-lime flavored drink mix, the percentage by weight would be approximately 76% citric acid, 2% potassium citrate, 8% natural lemon flavor, 1% natural lime flavor, 5% APM and 0.5% Vitamin C. The above mentioned formulation is included in the ribbon blender with the mixture being mixed for approximately 15 minutes with samples extracted therefrom to ensure uniformity of the mixture. The mix is then placed into an agglomeration unit. The agglomerating equipment may be, for example, an Anhydro Model 38 continuous fluid bed agglomerator. The mixture is continuously fed using a screw conveyor to the agglomeration unit and air is introduced so as to fluidize the unit and the particles are held suspended above the air dispersion plate. The agglomeration vehicle is composed of water with a coloring agent added. Therefore, not only is the agglomeration vehicle used to, in essence, cement the fluidized particles together, but also it is used to color the particles. The agglomerated product thereby is of a vivid color, adding to the overall desirability of the product. The processing is facilitated by using a three-zone agglomeration unit. Metal weirs with adjustable heights are inserted into the unit, thus yielding three distinct processing zones. Each zone has the same bedsurface area for fluidization and subsequent processing. In Zone 1, all of the agglomeration vehicle is sprayed on using a conventional two-fluid nozzle with an atomization air pressure of $2 \times 10^5$ Pa. Hence, Zone 1 is the primary agglomeration zone and preliminary drying zone. The inlet air temperature is approximately 90°C. The agglomeration vehicle is continuously fed at a rate of 15 kg/hr. The inlet air temperature in Zone 2 is 90°C and, therefore, Zone 2 becomes the primary drying zone. The inlet air temperature to Zone 3 is 30°C. This zone functions as the cooling zone. Processed powder exits the unit as a dried agglomerate. The density of the agglomerate is 0.45—0.6 grams per cc with a moisture content of between 1.0 and 1.8% by weight. The product throughput rate is 100—115 kg/hr. Tricalcium phosphate or another flow agent is added to the agglomerate and dispersed using conventional methods. Finished product is now ready for packaging.

## Example 2

A comestible mix, and more specifically a flavored beverage mix is set out by example hereinbelow, utilizing the instant fixation via agglomeration process. The first step is to take the raw APM dipeptide sweetener, and to mill said material to a particle size of between $5 \times 10^6$ to $12.5 \times 10^7$ m or more preferably to $1 \times 10^7$ and $3 \times 10^7$ microns. The milles APM is added to a blending apparatus for example, a Day Ribbon Blender with such components as citric acid, potassium citrate, natural fruit flavorings, juice solids, and a

**0 120 561**

portion of vitamin C. For example, in a fruit-flavored drink mix, the percentage by weight would be approximately 50—80% citric acid, 5—13% potassium citrate, 7% natural lemon flavor, 4% ground APM, 2% lemon juice solids, .5% vitamin C. The above mentioned formulation is included in the Ribbon Blender with the mixture being mixed for approximately 15 minutes with samples extracted therefrom to insure uniformity of the mixture. The mix is then fed into a batch agglomeration unit, each batch being about 907.2 kg. The agglomerating means may be for example, a Glatt fluid bed agglomerator Model WSG—500 which is available from Glatt Air Techniques, Ramsey, New Jersey. The mixture is added to the agglomeration unit and air is introduced so as to fluidize the particles of the complete mix. The fluidization air is introduced at 4000 cubic meters per hour and the particles are held suspended above the agglomerating base. The agglomerating vehicle is composed of water with a coloring agent added. The rate at which the agglomeration vehicle is sprayed is 1000 ml/min which induces the formation of agglomerated particles. With an inlet air temperature of between 40 and 70°C and a resulting outlet air temperature of 30 to 50°C agglomeration takes place. The compressed air, which is at an atomization pressure of 4 bars, is used to power the agglomeration vehicle as it is sprayed over and through the fluidized particles. The spraying phase of the process takes approximately one hour or less. With the agglomeration procedure essentially completed and the formation of agglomerate particles achieved, the temperature is increased to 80°C to facilitate drying. Therefore, not only is the agglomeration vehicle used to in essence cement the fluidized particles together, but also it is used to color plate the particles. The agglomerate produced thereby is of a vivid color, adding to the overall desireability of the product. The product is then dried to 1% moisture with a drying temperature that is about 80°C. Tricalcium phosphate or another flow agent is added to the agglomerator and fluidized for 2 to 3 minutes to disperse the ingredients. After this procedure, the product is then discharged and may be immediately packaged. The density of the agglomerate is about .7 to .8 grams per cc with a moisture content of between .8 and 1.4% by weight.

Example 3

By employing the above described fixation via agglomeration methods a fruit flavored beverage may be made with a reprsentative percentage by dry weight distribution of ingredients as follows:

| Ingredient | Percentage by weight |
| --- | --- |
| Acidulent | 35—90% |
| Flavors | 3—30% |
| APM | 2—10% |
| Maltodextrin (flavor carrier) | .005—20% |
| Potassium citrate | 0—25% |
| Tricalcium phosphates | 0—20% |
| Color | 0—3% |
| Vitamin C | 0—10% |
| Gums | 0—5% |
| Juice Solids | 0—20% |

4

### Example 4

The process according to the above enumerated methods may be used to produce a citrus (orange, lemon-lime) beverage, said beverage being composed of:

| Ingredient | Percentage by weight |
| --- | --- |
| Acidulents | 40—80% |
| Flavors | 5—25% |
| APM | 2—10% |
| Maltodextrin (flavor carrier) | 2—5% |
| Potassium citrate | 1—10% |
| Tricalcium phosphates | 2—5% |
| Color | .01—1% |
| Vitamin C | .05—1% |
| Xantham gum | .01—1% |
| Juice Solids | 0—20% |

### Example 5

The process according to the above-enumerated methods may be used to produce a fruit punch flavored beverage, said beverage being composed of:

| Ingredient | Percent by weight |
| --- | --- |
| Acidulents | 40—60% |
| Flavors | 5—15% |
| APM | 4—10% |
| Maltodextrin (flavor carrier) | 3—8% |
| Potassium citrate | 5—15% |
| Tricalcium phosphates | 4—10% |
| Color | .5—3% |
| Vitamin C | .5—1.5% |
| Juice Solids | 0—20% |

**0 120 561**

Example 6

The process according to the above enumerated methods may be used to produce a tea-flavored beverage, said dry mix being composed of:

| Ingredient | Percent by weight |
| --- | --- |
| Acidulents | 20—40% |
| Flavors | 0—10% |
| Tea | 25—55% |
| APM | 2—10% |
| Maltodextrin (flavor carrier) | .25—50% |
| Magnesium Oxide | 2—5% |
| Color | 0—2.5% |
| Vitamin C | 0—10% |
| Juice Solids | 0—20% |

The advantages endemic to the above-presented invention follow. By agglomerating the total mix the need for further processing is hereby reduced. By fixing via agglomerating the dipeptide sweetener within the other componets an agglomerate which presents the total product may be obtained. Agglomerates by their very nature are amenable to being handled by unmodified machinery. Most importantly, the improved fixation of the dipeptide sweetener APM via agglomeration outlined hereinabove prevents degradation of the dipeptide sweetener APM. By fixing the sweetener directly onto the mix components so that a particle composed of the whole mix base is obtained, the need for dissolving the APM is eliminated. With the relative absence of water the dipeptide which is sensitive to aqueous acid media may be interposed on an essentially-acid mix product without the risk of consequent breakdown. Moreover, the increased size and composition of the agglomerates aid in the rate of solubility of not only the APM but also such components as tea solids.

When equal weights of comparable dry beverage mixes were dissolved in two quarts of cold water, APM-containing agglomerates produced by the above described improved process display solubility characteristics equal to agglomerates wherein the binding agent is an aqueous dextrin solution and greatly superior to the solubility characteristics of dry mixed powders.

It has been found that surprisingly, water is preferred to an aqueous dextrin solution as an agglomerating fluid for APM-containing beverage mixes as the water-agglomerated particles are more resistant to cracking or attrition. Specifically, it has been found that in a standardized article strength test, wherein 10 gram of an agglomerated particle fraction which is retained on a #40 U.S. Standard sieve is subjected to a 15 minute abuse cycle in a testing instrument known as a friabulator (available from Key Industries, Englishtown, New Jersey) more fine particles (less than #60 U.S. Standard Sieve) are generated from beverage agglomerates which utilized a 40% (by weight) aqueous solution of a 10 D.E. dextrin as the agglomerating vehicle than when water was used as the agglomerating vehicle. In the actual experiment, 5.26% by weight of the abused agglomerates passed through a 60 U.S. mesh screen in the case of the dextrin solution agglomerate; whereas, only 3.09% by weight of the abused agglomerates passed through a 60 U.S. mesh screen in the case of the water agglomerated material of this invention.

**Claims**

1. A method for fixing a dipeptide sweetener on a comestible substrate via agglomeration comprising the steps of:
   a. mixing acidulants flavoring and a dipeptide sweetener;
   b. fluidizing said mixture with heated air; and
   c. agglomerating said fluidized mixture using water as the agglomerating vehicle.

2. A method according to claim 1 wherein the agglomerating vehicle consists of water and a colorant.

3. A method according to claim 1 wherein said agglomerating step is conducted at an inlet air temperature of less than 204.4°C.

4. A method according to claim 1, wherein the dipeptide sweetener is aspartyl-phenylalanine methyl ester, said dipeptide having a particle size between 0.5—300 micrometers.

6

# 0 120 561

**Patentansprüche**

1. Verfahren zum Anbringen eines Dipeptid-Süßstoffes auf einem eßbaren Substrat durch Agglomerieren, mit folgenden Schritten:

a. Säuerungsmittel, Geschmackstoffe und ein Dipeptid-Süßstoff werden miteinander vermischt;

b. das so erhaltene Gemisch wird mit Heißluft fluidisiert und

c. das fluidsierte Gemisch wird unter Verwendung von Wasser als Agglomerationsmedium agglomeriert.

2. Verfahren nach Anspruch 1, dadurch gekennzeichnet, daß das Agglomerationsmedium aus Wasser und einem färbenden Stoff besteht.

3. Verfahren nach Anspruch 1, dadurch gekennzeichnet, daß das Agglomerieren bei einer Lufteintrittstemperatur unter 204,4°C durchgeführt wird.

4. Verfahren nach Anspruch 1, dadurch gekennzeichnet, daß der Dipeptid-Säßstoff Aspartylphenylaminmethylester ist und das Dipeptid eine Korngröße zwischen 0,3 und 300 µm hat.

**Revendications**

1. Procédé pour fixer un agent sucrant dipeptidique sur un substrat comestible au moyen d'une agglomération comprenant les étapes de:

a. mélanger des arômes acidulants et un agent sucrant dipeptidique;

b. fluidiser ce mélange avec de l'air chaud; et

c. agglomérer ce mélange fluidisé en utilisant de l'eau comme véhicule agglomérant.

2. Procédé selon la revendication 1, caractérisé en ce que le véhicule agglomérant est constitué d'eau et d'un colorant.

3. Procédé selon la revendication 1, caractérisé en ce que cette phase d'agglomération est effectuée à une température d'air à l'arrivée inférieure à 204,4°C.

4. Procédé selon la revendication 1, caractérisé en ce que l'agent surcrant dipeptidique est un ester méthylique de phénylalanine aspartique, ce dipeptide ayant une taille de particule comprise entre 0,5 et 300 microns.

7